# EUROPEAN PATENT SPECIFICATION

(11) **EP 3 298 877 B1**
(45) Date of publication and mention of the grant of the patent: **25.09.2019**
(21) Application number: 17193205.6
(22) Date of filing: 26.09.2017
(51) Int. Cl.: A01D 45/00

(54) **HARVESTING VEHICLE FOR HARVESTING OF CROPS BY A USER, IN PARTICULAR GREEN ASPARAGUS**
ERNTEFAHRZEUG ZUM ERNTEN VON FELDFRÜCHTEN DURCH EINEN BENUTZER, INSBESONDERE VON GRÜNEN SPARGELN
VÉHICULE DE RÉCOLTE POUR LA RÉCOLTE DE CULTURES PAR UN UTILISATEUR, EN PARTICULIER DES ASPERGES VERTES

(30) Priority: 26.09.2016 NL 2017526
(43) Date of publication of application: 28.03.2018
(73) Proprietor: Engels Familie Holding B.V., 5981 NC Panningen (NL)
(72) Inventor: ENGELS, Franciscus Maria, 5981 NC PANNINGEN (NL); ENGELS, Marcus Franciscus, 5981 NC PANNINGEN (NL); ENGELS, Christiaan Michiel, 5981 NC PANNINGEN (NL)
(74) Representative: Algemeen Octrooi- en Merkenbureau B.V.

(56) References cited:
- DE-A1- 4 319 085
- DE-A1-102007 006 224
- DE-A1-102007 011 550
- DE-U1- 20 310 655
- US-A- 4 425 751
- US-A- 5 454 444

## Description

The present invention relates to a vehicle for harvesting crops, in particular for harvesting crops growing in a row, such as, for example, green asparagus.

Such harvesting vehicles are known from the prior art and are used in particular as an aid when harvesting green asparagus. The known harvesting vehicle comprises a vehicle frame with four wheels. The vehicle frame is provided with a seat and footrests in such a way that the user is seated a short distance above the asparagus field when using the vehicle. In this case, a working space is formed between the legs of the user, so that the user can select and, if desired, harvest the green asparagus by cutting it. After harvesting a specific area, the user can move the harvesting vehicle along the row of asparagus to a new area of asparagus to be harvested. To this end, the known harvesting vehicle furthermore comprises a drive motor, an accelerator pedal and a joystick by means of which the user can advance and steer the harvesting vehicle.

A problem of the known vehicle is the fact that it is relatively difficult for a user to steer it and simultaneously harvest asparagus. The user has to use his feet to accelerate, steer with his hands using a joystick, and harvest the asparagus with his hand. This requires a certain degree of training from the user before he can use the machine efficiently. Even after some training, operating the machine requires a relatively high degree of concentration which adversely affects the harvesting process.

The vehicle assembly known from US 5,454,444 A for selectively spraying weeds in a row of crops with chemicals proposes to provide steering means which can be operated by a user's knee, so that the user's hands are free to spray the chemicals. This also requires a certain degree of training and concentration.

There are also automatic asparagus-picking machines, such as for example from US 4,425,751. However, such machines are generally not yet able to achieve the desired productivity and reliability of a human user.

In DE 203 10 655 U1, on which the preamble of Claim 1 is based, a harvesting vehicle with a sensor is described, in which the sensor is passed through a ploughing furrow and emits a signal when the sensor comes into contact with the wall of the ploughing furrow. This is laborious, complicated and inaccurate, since it requires the presence of an accurately placed ploughing furrow.

Overall, there is a need for a harvesting vehicle which is simple to operate for a user and which, in particular, can be used with little training.

It is therefore an object of the present invention to provide a harvesting vehicle which improves the efficiency of the harvesting process.

The object of the present invention is achieved by a harvesting vehicle according to Claim 1. The harvesting vehicle comprises a vehicle frame and transport means connected thereto. The transport means may comprise, for example, tyres or chains, such as pneumatic tyres or caterpillar tracks, and are in particular adapted to transporting the harvesting vehicle over agricultural land. The harvesting vehicle furthermore comprises drive means which are configured for driving the transport means and are connected to the vehicle frame. In this case, the driving according to the present invention comprises at least accelerating, decelerating and/or steering (that is to say changing direction) of the vehicle. In this case, the harvesting vehicle is configured in such a way that it is movable above and over a row of crops, in particular above and over a row of green asparagus, by means of the drive means and the transport means. This means that the shape and dimensions of the vehicle are adapted such that it can drive above and over the row of crops, such as green asparagus, without damaging it. The transport means, such as wheels or caterpillar tracks, are situated, for example, on either side of the row of crops and the vehicle frame has a driving height which is such that it is situated above the row of crops and essentially cannot touch or damage these crops. The vehicle furthermore comprises a user seat which is connected to the vehicle frame and delimits a working space for the user. The user seat and the harvesting vehicle are configured in such a way that, at least during use, at least a part of the row of crops is situated in the working space. The user situated in the user seat can then harvest at least a part of the crops of the row of crops situated in the working space. The user seat is preferably arranged relatively low to the ground, so that the user can reach the bottom of the row of crops relatively easily.

According to the present invention, the harvesting vehicle is provided with sensor means for detecting the crops in the row of crops. In this case, the sensor means are configured for detecting the crops themselves, in particular green asparagus stalks growing above ground, as will be explained below, so that it is thus possible to sense and/or determine a relative location and/or direction of travel of the vehicle with respect to the row of crops. The vehicle according to the present invention is furthermore provided with a control unit which is connected to the sensor means and the drive means and which is configured for controlling the drive means on the basis of the crops detected by the sensor means. According to the present invention, controlling comprises at least accelerating, decelerating and/or steering (that is to say determining the direction) of the vehicle.

By using the sensor means and the control unit, it is possible, on the basis of the crops sensed by the sensor means, to accelerate the harvesting vehicle to a desired speed, to decelerate it to a desired speed and/or to steer it in a desired direction, so that the user no longer has to perform one or more tasks himself. As a result thereof, the user can devote more attention to harvesting the crops, such as cutting the green asparagus, thus improving the efficiency of the harvesting process and achieving the object of the present invention.

Below, advantageous embodiments of the invention will be explained.

In an embodiment, controlling only comprises changing the direction of the harvesting vehicle. The sensor means are configured to sense the crops and the control unit is configured to determine only the direction of travel of the vehicle on the basis of this observation and, if necessary, adjust it. In this embodiment, accelerating and/or decelerating is initiated, in particular, by the user himself. The user determines whether he wants to move forward and steering (determining the direction) takes place on the basis of the sensor means and the control unit. As a result thereof, the user no longer has to steer and is able to concentrate more on the harvesting process. The control unit may in theory play a role during acceleration/deceleration, for example by controlling - after initiation by the user - the vehicle to a predetermined desired speed. However, with this embodiment, this controlling takes place independently of the crops captured by the sensors.

In an embodiment, controlling comprises accelerating and/or decelerating the harvesting vehicle, on the basis of the crops captured by the sensor means. As has already been mentioned, controlling the harvesting vehicle may additionally comprise changing its direction. By accelerating, decelerating and/or steering, the entire driving process of the harvesting vehicle is taken over by the sensor means and the control unit, as a result of which the user can concentrate fully on the harvesting process.

Initiation of the acceleration or deceleration of the harvesting vehicle by the user can take place in a relatively simple and safe manner if the harvesting vehicle comprises a first user-operable activating member which is connected to the control unit, wherein the control unit is configured to move the harvesting vehicle forward at a first predetermined speed when the first activating member is activated. The user can activate the first activating member, which is, for example, designed in the form of a foot pedal, in order thus to bring the vehicle to a first movement speed. The control unit may be configured to keep the vehicle moving forward at the first movement speed during activation of the foot pedal. The control unit may furthermore be configured to stop the harvesting vehicle when the first activating member is deactivated. In this way, it is possible to move the vehicle forward at a constant speed by activating the first activating member. This constant first speed may be associated with a harvesting speed and may thus be relatively slow, so that the user can harvest the crops in a simple manner. By using the first predetermined speed, the user does not have to control the speed of the vehicle himself, as the control unit will do this for him, so that the user can devote more attention to the harvesting process. Furthermore, the speed of the vehicle is ensured, even when for example waterlogged areas alternate with hard areas on the agricultural land or when there are hills or bumps.

In an embodiment, the harvesting vehicle comprises a second user-operable activating member which is connected to the control unit, wherein the control unit is configured to move the harvesting vehicle forward at a second predetermined speed when the second activating member is activated. The second predetermined speed differs from the first predetermined speed. This gives the user the option of bringing the vehicle to a different speed by activating the second activating member. In an embodiment, the control unit is configured to move the harvesting vehicle forward at a second predetermined speed only when both the first and the second activating member are activated. In that case, only activating the second activating member does not result in the vehicle reaching the second speed. In particular, the second predetermined speed may be greater than the first predetermined speed. The second predetermined speed may then, for example, be associated with a relatively high transport speed. Thus, the user is able to alternate between a relatively low harvesting speed and a relatively high transport speed, thus making the harvesting machine very flexible.

The user seat may be configured in various ways. The user seat may be a reclining seat or an upright seat. When using a reclining seat, consideration may be given to a reclining seat with ventral position, so that the face of the user faces the row of crops, which is in itself advantageous. Alternatively, an upright seat may be used, wherein use is advantageously made of footrests. The footrests may be connected to the vehicle frame and may be situated at a distance from the seat, viewed in the direction of travel. The respective footrests may be arranged at a distance apart with respect to each other and preferably at a distance viewed in a direction at right angles to the direction of travel. In this way, the working space is delimited by the seat and the footrests.

In an embodiment, the transport means comprise a first drive wheel and a second drive wheel, wherein the first drive wheel and the second drive wheel are provided on mutually opposite sides of the harvesting vehicle. The first drive wheel and the second drive wheel may be drive wheels which form part of, for example, wheels or caterpillar tracks, as has already been explained above. In this embodiment, the first drive wheel and the second drive wheel can be driven independently of each other by the drive means. In this way, it is possible to drive the mutually opposite wheels independently of each other, making it possible to give each drive wheel mutually different speeds of rotation and thus rendering a steering action (change of direction) of the harvesting vehicle possible. The way in which the drive wheels are driven independently may take many different forms, for example by using a single drive motor with a suitable transmission or by using an independent drive motor for each drive wheel.

The sensor means comprise at least one first sensor member which is configured for detecting at least a part of one or more of the crops. The sensor member may be, in particular, an infrared sensor which is configured to emit an infrared beam and to detect objects within its radius. By means of such a sensor, it is possible to detect if a crop, such as for example an asparagus stalk, is within its radius. If this is the case, then this might be interpreted as a sign that the harvesting vehicle is coming too close to the centre of the row, after which a steering operation (in this case a change in direction) may be effected. The infrared sensor may be configured to only detect objects which are at a specific distance from the sensor. Thus, it is for example conceivable for the infrared sensor to be configured to emit an infrared beam and only to detect objects which are within a maximum distance of, for example, 1 metre of the radius. This makes accurate adjustment of the sensor means and the area to be detected possible, as will also be explained below.

The first sensor member is provided near a first lateral side of the harvesting vehicle. This means that the first sensor member is associated with a side of the vehicle. Preferably, the first sensor member is provided on the front side of the vehicle, viewed in the direction of travel of the vehicle, with the sensor member being moved to a side with respect to the central longitudinal axis of the vehicle.

The sensor means comprise at least one second sensor member which is configured for detecting at least a part of one or more of the crops. The second sensor member may be configured to be identical to the first sensor member, as described above, but may of course also be configured differently. By using two sensors, it is possible to observe various crops or to observe a different area, so that accurate control is possible.

The first sensor member is provided near the first lateral side of the harvesting vehicle and the second sensor member is provided near a second lateral side, opposite the first lateral side. This is understood to mean that the first sensor member is associated with a first side of the vehicle and that the second sensor member is associated with the opposite, second side of the vehicle. The harvesting vehicle is configured to drive over the row of crops, with the first sensor member on a first side of the row and with the second sensor member on the opposite second side of the row. In this way, the row of crops can be monitored on both sides by means of two sensor members, thus making more accurate sensing and control possible.

The first sensor member and/or the second sensor member may comprise an infrared line sensor which is set, in particular, to a specific maximum distance and a specific viewing angle. The infrared sensor may be of the type HRT 46B/44S12, available from Leuze Electronic GmbH, Germany.

If the first sensor member is provided near the first lateral side of the harvesting vehicle, a further sensor member may be provided near the same first lateral side of the harvesting vehicle in an embodiment. In this case, the first sensor member and the further sensor member are substantially provided on the same side of the harvesting vehicle. This makes it possible to look from different positions in order to detect the crops in the row of crops.

In this case, it is for example conceivable for the further sensor member to be provided in a higher position with respect to the sensor member, so that the row of crops can be observed from different heights.

In addition or alternatively, it is conceivable for the further sensor member to be provided further downstream of the first sensor member, viewed in the direction of travel. This makes it possible, for example, to detect the same area of the row of crops at different points in time, which contributes to a more accurate control of the harvesting vehicle.

In an embodiment, the first sensor member is configured for detecting crops in a first detection direction. It is conceivable to look at green asparagus stalks, for example, which can easily be detected by means of infrared light.

In an embodiment, the first detection direction is situated substantially at an angle with respect to the longitudinal axis of the harvesting vehicle. In this case, the longitudinal axis of the harvesting vehicle is defined as the axis of the vehicle which coincides with the direction of travel when the vehicle is travelling in a straight line. By arranging the first detection direction at an oblique angle with respect to the longitudinal axis and in particular directing it towards the longitudinal axis of the vehicle, it is possible to look obliquely forward, as a result of which it is possible to accurately determine if the vehicle is moving in the correct direction or, on the contrary, has to be steered away from or towards the row of crops.

When using a first sensor member and a second sensor member, it is conceivable for the second sensor member to be configured for detecting crops in a second detection direction. In this case, the second detection direction may differ from the first detection direction of the first sensor member.

In an embodiment, the second detection direction may be substantially at an angle with respect to the longitudinal axis of the harvesting vehicle. In this case, it is conceivable for the second detection direction to be directed in the direction of the longitudinal axis. As has already been mentioned, this makes accurate detection of the row of crops possible.

When using two sensor members which are provided on either side of the vehicle, it is advantageous if the first detection direction of the first sensor member is at an angle with respect to the second detection direction of the second sensor member. In a particular embodiment, the first sensor member and the second sensor member are provided on either side of the vehicle and they are both directed towards the longitudinal axis of the vehicle. Thus, the sensor members look from either side onto the row of crops, as a result of which accurate control, in particular of the direction, is possible.

In an embodiment, it is possible for the sensor means to comprise a sensing member in order to gain an indication of the speed of the vehicle. The sensing member is configured for sensing an indication of the speed of movement of the harvesting vehicle, for example by sensing the speed of rotation of a wheel or by detecting speed and/or number of crops moving past. The sensing member may be connected to the control unit, so that the speed of the vehicle is adjustable. In the latter case, the control unit is configured for accelerating or decelerating the harvesting vehicle on the basis of the signal detected by the sensing member.

In an embodiment, the sensing member is configured for detecting at least a part of the row of crops in a sensing direction, wherein the sensing direction is substantially at right angles to the longitudinal direction of the harvesting vehicle. In this way, speed detection on the basis of the detection of crops, in a direction at right angles to the direction of travel, is possible.

The invention will be explained in more detail below by means of the following figures which show a number of embodiments of the invention. The figures show:
Figs. 1a - 1c - a diagrammatic front view, top view and side view of a harvesting vehicle according to the present invention;
Fig. 2a - a diagrammatic side view of an embodiment of a harvesting vehicle according to the present invention;
Fig. 2b - a diagrammatic top view of a further embodiment according to the present invention;
Fig. 3a - a diagrammatic top view of a possible arrangement of sensor means for a harvesting vehicle according to the present invention;
Fig. 3b - a diagrammatic side view of a possible further arrangement of sensor means for a harvesting vehicle according to the present invention;
Fig. 3c - a diagrammatic side view of a possible additional or alternative arrangement of sensor means for a harvesting vehicle according to the present invention;

For the sake of clarity, identical or similar parts in the following figures - even in mutually different embodiments - are in each case provided with the same reference numeral.

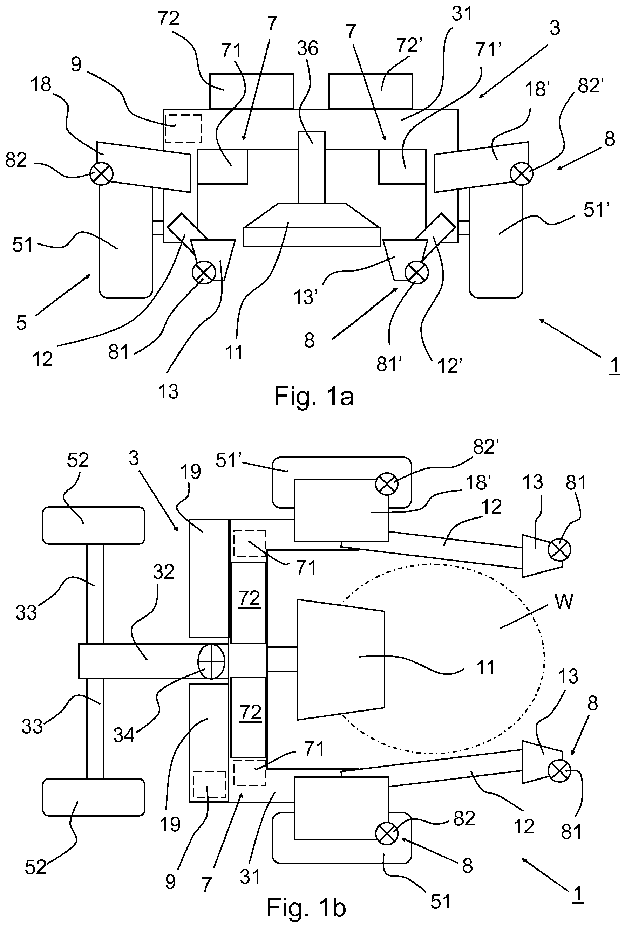

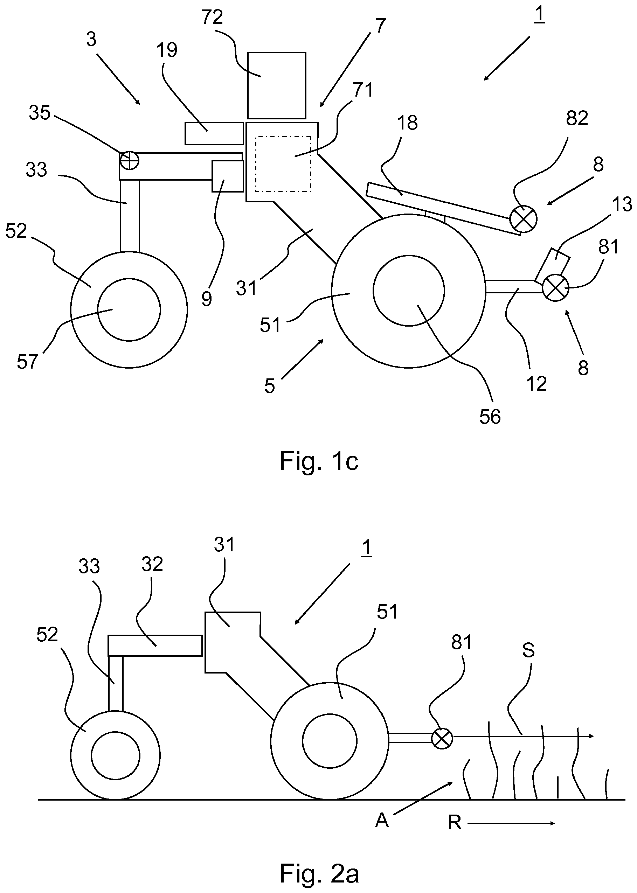

Figs. 1a to 1c respectively show a diagrammatic front view (Fig. 1a), a top view (Fig. 1b) and a side view (Fig. 1c) of a harvesting vehicle 1 according to a first embodiment of the present invention. In this case, Fig. 1c shows the harvesting vehicle 1 from the left side in Fig. 1a. The general construction of this harvesting vehicle will be explained with reference to Figs. 1a to 1c.

The harvesting vehicle 1 illustrated in Figs. 1a-1c is composed of a vehicle frame 3. As can better be seen in Fig. 1c, the frame 3 comprises a front frame part 31, a middle frame part 32 and a rear frame part 33. Transport means 5 in the form of front wheels 51, 51' are provided on the front frame part 31. The transport means 5 furthermore comprise rear wheels 52, 52' which are attached to the rear frame part. Fig. 1b shows that four wheels 51, 51', 52, 52' are provided in total. The wheels denoted by reference numeral 51 comprise a rim 56 and a tyre 51 (see Fig. 1c) and the wheels denoted by reference numeral 52 also comprise a rim 57 and a tyre 52. Here, the rear wheels 52 are smaller than the front wheels 51. Of course, other embodiments of the wheels are conceivable. Alternatively, it is furthermore conceivable that the vehicle is provided with, for example, caterpillar tracks which form the transport means 5.

Drive means 7 are provided on the frame 3 in the form of an electric motor 71, 71' and which are configured for driving the transport means 5. By means of a drive (not shown), the motor is operatively connected to the front wheels 51, 51'. In this case, a single electric motor 71, 71' is provided for each front wheel 51, 51' in the illustrated embodiment. The left-hand electric motor 71 (Fig. 1a) is configured for driving the left-hand wheel 51 and the right-hand electric motor 71' is configured for driving the right-hand wheel 51'. The two front wheels are thus configured as a first drive wheel and a second drive wheel 51', which can easily be driven independently of each other by the drive means (7). This makes a steering action possible, as the first drive wheel can be given a different speed of rotation than the second drive wheel. By making the right-hand drive wheel 51 rotate more quickly than the left-hand drive wheel 51' (in a forward direction, see arrow R in Fig. 2a), the vehicle will move to the left. Conversely, it is possible to steer to the right. On top of the vehicle 1, batteries 72, 72' are provided, by means of which the electric motors 71, 71' can be provided with energy. Although this embodiment is advantageous, an embodiment comprising other motors, such as a combustion engine, or with only a single motor driving two wheels 51, 51' is conceivable. By means of the drive means 5 and transport means 7 described here, the harvesting vehicle 1 can be moved above and over a row R of crops, in particular above and over a row of asparagus A (see Fig. 2a). In the direction of arrow R, the vehicle then drives in a forward direction and in a rearward direction in the opposite direction of arrow R.

Now again referring to Figs. 1b and 1c, it can be seen that the vehicle 1 has a user seat 11 which is attached to the vehicle frame 3. The user seat 11 is provided on the front side of the vehicle. The seat has a backrest and seat (not indicated in more detail) and may in theory be designed as desired. Brackets 12 extend from the seat 11 in a forward direction and are provided with footrests 13 at one end. In this way, the user can sit on the seat 11 while his legs rest on the supports 13. As can be seen in Fig. 1b, the user seat 11 delimits a working space W for the user. Without having to leave his seat, the user can easily reach and, if desired, harvest the crops situated in the working space W. The user seat 11 and the harvesting vehicle 1 are thus configured in such a way that, at least during use, the user sitting in the user seat 11 is able to harvest at least a part of the crops A of the row R of crops situated in the working space W. The vehicle 1 is furthermore also provided with support parts 18, 18'. These are in each case fitted above the front wheels 51, 51', on either side of the user seat 11. Trays or crates can be placed on these support parts 18, 18'. After a crop has been harvested, in particular after a green asparagus has been cut, the user can place this crop in a tray which is suitable for the purpose. Optionally, full trays or crates may be placed on further support parts 19, 19' which are provided on the rear side of the first frame part 31 (see Fig. 1b).

According to the present invention, the harvesting vehicle is furthermore also provided with sensor means 8 which are configured for detecting at least one feature of the row R of crops A. According to the present invention, this feature of the row of crops is the crop itself, for example due to the fact that the sensor member is configured to detect a stalk of a green asparagus. In this embodiment, the sensor means are then configured for detecting crops A in the row R of crops. In the embodiment illustrated in Figs. 1a-1c, the sensor means 8 comprise four sensor members 81, 81', 82, 82' in total. The sensor members 81, 82 are arranged on the right-hand side of the vehicle 1 (bottom side of Fig. 1b) and the sensor members 81', 82', are arranged on the left-hand side (top side Fig. 1b). In this case, two sensor members 81, 81' are furthermore provided on the footrest 13, 13' and two sensor members on the support part 18, 18'.

The sensor means are operatively connected to a control unit 9 provided on the vehicle 1. The control unit 9 is furthermore operatively connected to the drive means 7. As will be explained later, the sensor members 81, 81', 82, 82' are directed towards the row of crops. If the vehicle drives too close to the crop, the sensor member will detect the crop, as a result of which the control unit 9 may take action. The action will be, in particular, steering (changing direction) of the harvesting vehicle, so that the vehicle 1 can follow a correct, desired path over the row of crops R. The sensor members used may be detectors for detecting the presence of crops. In particular, optical detectors are suitable, such as infrared sensors, in particular infrared line sensors, for example of the type HRT 46B/44S12, available from Leuze Electronic GmbH, Germany. The control unit 9 is configured to steer the drive means out of the row of crops on the basis of the crop detected by the sensor means 8. It is advantageous if steering only comprises changing the direction of the harvesting vehicle 1, although additional or alternative control actions, such as accelerating and/or decelerating the harvesting vehicle 1 are also conceivable.

The frame 3 of the harvesting vehicle 1 may be configured in many ways. Use may be made of various vehicle chassis which are known to those skilled in the art. If desired, the chassis 3 and the user seat 11 are in this case adapted in such a way that the user seat 11 is provided in an ergonomic way, so that the working space W which is formed around the user seat allows the user to reach the crops in order to harvest these.

In the embodiment illustrated in Figs. 1a-1c, the frame 3 is advantageously embodied by the front, middle and rear frame part. In this embodiment, the middle frame part 32 is pivotably connected to the front frame part 31 (see Fig. 1b) by means of a joint 34. This makes it possible for the middle frame part 32 to pivot with respect to the front frame part 31 in the plane of the drawing from Fig. 1b. Due to a steering action (change in direction) of the front frame part 31, the middle frame part 32 will automatically follow. The rear frame part 33 is also pivotably connected to the middle frame part 32 and in such a way that a turn of the rear frame part 33 in the plane of the drawing from Fig. 1a is possible. As a result thereof, the vehicle 1 will have improved driving characteristics over bumps and the like, which is more comfortable for the user.

The fact that the harvesting vehicle 1 may be provided with a first user-operable activating member which is operatively connected to the control unit 9 is not visible in Fig. 1a-1c. The activating member may be designed as a button, for example which may be operated by the hand or foot of the user. Preferably, the activating member is designed as a foot pedal which is attached to one of the footrests 13. In this embodiment, the control unit 9 may be configured to move the harvesting vehicle forward at a first predetermined speed when the first activating member is activated. By depressing, for example, the foot pedal, the vehicle is set in motion, in which case the control unit 9 ensures that the vehicle moves at a substantially constant speed in a forward direction (see arrow R in Fig. 2a). When the foot pedal is released, the control unit 9 will ensure that the harvesting vehicle 1 stops again. This speed may be selected beforehand in such a way that it corresponds to a speed at which a user can harvest the crops in a simple way (harvesting speed). Furthermore, a second user-operable activating member may then be provided, for example in the form of a second foot pedal or manually operable button, in which case the activating member is operatively connected to the control unit 9. The control unit 9 is then configured to move the harvesting vehicle 1 forward at a second predetermined speed when the second activating member is activated. If desired, it is possible to make the control unit 9 move the vehicle only at the second predetermined speed if both the first and the second activating member are activated. The second predetermined speed may be set to be greater than the first predetermined speed. The second speed may then be a speed at which the vehicle can move forward in a safe but quick way (transport speed). If the user initiates the desired speed in this way, in combination with a change in direction of travel (steering) of the vehicle which is brought about by the sensor means and control unit, a readily operable harvesting vehicle is obtained, by means of which it is possible to navigate past and harvest the crops in an efficient way.

Referring now to Fig. 2a, an embodiment of the harvesting vehicle 1 is diagrammatically shown, comprising a frame 31, 32, 33 composed of three parts and having wheels 51, 52 which drives along a row R of crops A. Viewed in the direction of travel R, the sensor 81 is directed forwards, towards the crops A, and is configured for detecting a crop which comes within range of the sensor 81. When this happens, then that means that the vehicle 1 is coming too close to the crops and then the control unit 9 can perform a steering action, and in particular a change in direction of travel of the vehicle 1, via the drive means (not shown).

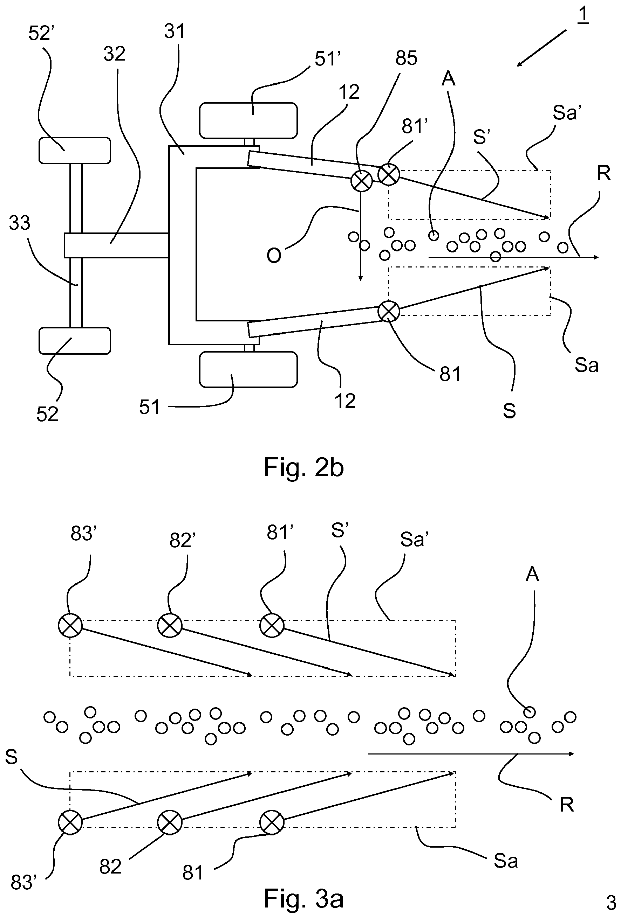

Fig. 2b shows a further embodiment of a harvesting vehicle 1 which is configured in a similar way to Figs. 1a-1c, wherein, in addition to a first sensor 81 on the right-hand side, a second sensor 81' is also provided on the left-hand side. The vehicle drives over a row R of crops A, in particular a row R of green asparagus A. In this case, the left-hand wheels are placed on the left-hand side of the row R and the right-hand wheels are placed on the right-hand side of the row R. The sensors 81, 81' are placed on either side of the row R and directed towards the row R of asparagus A. The sensors are optical sensors, in particular infrared line detectors, which can detect objects within the radius S, S' up to a specific (adjustable) distance. Thus, each sensor 81, 81' forms an associated detection area Sa, Sa' as it were, at least while the vehicle 1 is moving. When a crop, for example the stem of an asparagus A, enters the detection area Sa, Sa' (line S, S' is interrupted by the stem of the asparagus A), then the respective sensor member 81, 81' emits a signal to the control unit 9, after which the latter may perform a steering action by means of the drive means 7 and the transport means 5, in particular by changing the direction of the vehicle 1. This may be achieved by actually changing the direction of the individual wheels 51, 51'; but also by causing the driven wheels 51, 51' to rotate at mutually different speeds, as described above.

Fig. 2b furthermore also shows that a sensing member 85 is provided which is configured for sensing an indication of the speed of movement of the harvesting vehicle 1. In the illustrated embodiment, this is an optical sensor, in particular an infrared sensor (line sensor) which is configured to detect the crops. The sensing direction O is at right angles to the normal direction of travel of the vehicle 1. By detecting the number of stems A per unit time, an indication for the speed of the vehicle can be determined. The control unit may, if desired, take action, for example if the speed is excessive. Thus, it is for example possible to prevent the transport speed from being activated when the sensing member detects crops. This may prevent undesirable driving over the row of crops at excessive speed, which could result in damage.

Fig. 3a shows that a plurality of sensors 81, 81', 82, 82', 83, 83' may be used on either side, each with their own detection direction S, S'. The three sensors arranged in succession will define an associated detection area Sa, Sa'. In this way, the control accuracy of the vehicle 1 may be increased further, as a larger area can be monitored.

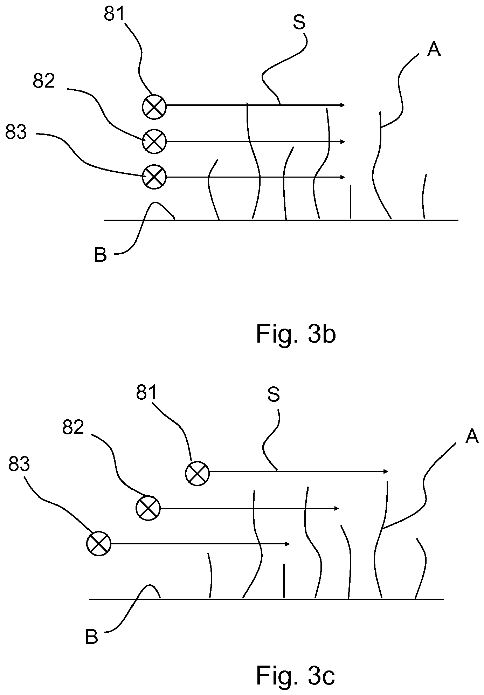

Fig. 3b shows that three sensors 81, 82, 83 can be placed one above the other in order to watch the crops A growing from the soil B. In this way, the detection area may also be increased in a vertical direction.

Fig. 3c actually shows a combination of Figs. 3a and 3b, in which the sensors are placed at mutually different heights and one behind the other, viewed in the direction of travel. In this case, a relatively large detection area is achieved as well, with the detection area being increased in both a horizontal direction and a vertical direction.

The invention has been described above by means of some possible embodiments. Alternative embodiments are conceivable and it has already been explained that the frame may be configured differently. The transport means may be in the form of wheels and/or caterpillar tracks. The sensor members may be light detectors, but may also be configured in an alternative way. To this end, the sensor members may be provided on the vehicle in a suitable manner, as explained, for example, with reference to Figs. 3a to 3c. Combinations of these arrangements are conceivable. The requested protection is defined by the attached claims.

## Claims

1. Harvesting vehicle (1) for harvesting crops (A) by a user, comprising:
- a vehicle frame (3) and transport means (5) connected thereto;
- drive means (7) which are configured for driving the transport means (5) and are connected to the vehicle frame (3), wherein the harvesting vehicle is configured in such a way that it is movable above and over a row (R) of crops, in particular above and over a row of asparagus (A), by means of the drive means (7) and the transport means (5);
- a user seat (11) which is connected to the vehicle frame (3), wherein the user seat (11) delimits a working space (W) for the user, and wherein the user seat (11) and the harvesting vehicle (1) are configured in such a way that, at least during use, the user situated in the user seat (11) can harvest at least a part of the crops (A) of the row (R) of crops situated in the working space (W);
**characterized in that** the harvesting vehicle (1) is provided with:
- sensor means (8) for detecting the crops (A) in the row of crops (R) to sense and/or determine a relative location and/or direction of travel of the vehicle (1) with respect to the row of crops; as well as
- a control unit (9) which is connected to the sensor means (8) and the drive means (7) and which is configured for controlling the drive means on the basis of the crops (A) detected by the sensor means (8),
wherein the sensor means (8) comprise at least one first sensor member (81) which is configured for detecting at least a part of one or more of the crops, wherein the first sensor member (81) is provided near a first lateral side of the harvesting vehicle, and wherein the sensor means (8) comprise at least one second sensor member (81', 82, 82') which is configured for detecting at least a part of one or more of the crops (A), wherein the second sensor member (81', 82') is provided near a second lateral side of the harvesting vehicle (1), opposite the first lateral side.

2. Harvesting vehicle according to claim 1, wherein the first sensor member (81) is configured for detecting crops in a first detection direction, wherein the first detection direction is substantially at an angle with respect to the longitudinal axis of the harvesting vehicle, and wherein the second sensor member (81', 82') is configured for detecting crops in a second detection direction, wherein the second detection direction is substantially at an angle with respect to the longitudinal axis of the harvesting vehicle (1), wherein the first detection direction is at an angle with respect to the second detection direction.

3. Harvesting vehicle according to any of the preceding claims, wherein controlling comprises changing the direction of the harvesting vehicle (1), accelerating the harvesting vehicle and/or decelerating the harvesting vehicle (1).

4. Harvesting vehicle according to any of the preceding claims, wherein the sensor means (8) comprise a sensing member (85) which is configured for sensing an indication of the speed of movement of the harvesting vehicle (1), wherein the sensing member (85) is configured for detecting at least a part of the crops (A) in a sensing direction (O), wherein the sensing direction is substantially at right angles to the longitudinal direction of the harvesting vehicle, wherein the control unit (9) is configured for accelerating or decelerating the harvesting vehicle on the basis of the signal detected by the sensing member.

5. Harvesting vehicle according to any of the preceding claims, comprising a first user-operable activating member which is connected to the control unit (9), wherein the control unit (9) is configured to move the harvesting vehicle (1) forward at a first predetermined speed when the first activating member is activated, and in particular wherein the control unit (9) is configured to stop the harvesting vehicle (1) when the first activating member is deactivated.

6. Harvesting vehicle according to claim 5, comprising a second user-operable activating member which is connected to the control unit (9), wherein the control unit (9) is configured to move the harvesting vehicle (1) forward at a second predetermined speed when the second activating member is activated, and in particular wherein the control unit (9) is configured to move the harvesting vehicle (1) forward at a second predetermined speed only when both the first and the second activating member are activated.

7. Harvesting vehicle according to claim 6, wherein the second predetermined speed is greater than the first predetermined speed.

8. Harvesting vehicle according to any of the preceding claims, wherein the transport means (5) comprise a first drive wheel (51) and a second drive wheel (51'), wherein the first drive wheel (51) and the second drive wheel (51') are provided on mutually opposite sides of the harvesting vehicle (1) and can be driven independently of each other by the drive means (7).

9. Harvesting vehicle according to claim 1 or a claim dependent thereon, comprising a further sensor member (82, 83) which is provided near the first lateral side of the harvesting vehicle (1).

10. Harvesting vehicle according to claim 9, wherein the further sensor member (82, 83) is provided in a higher position with respect to the first sensor member (81) and/or further downstream, viewed in the direction of travel, of the first sensor member (81).

## Patentansprüche

1. Erntefahrzeug (1) zum Ernten von Pflanzen (A) durch einen Benutzer, umfassend:
- einen Fahrzeugrahmen (3) und ein damit verbundenes Transportmittel (5);
- Antriebsmittel (7), die zum Antreiben des Transportmittels (15) konfiguriert sind, und mit dem Fahrzeugrahmen (3) verbunden sind, wobei das Erntefahrzeug so konfiguriert ist, dass es oberhalb und über eine Reihe (R) von Pflanzen, insbesondere oberhalb und über eine Reihe von Spargel (A), mittels der Antriebsmittel (7) und der Transportmittel (5) beweglich ist;
- einen Benutzersitz (11), der mit dem Fahrzeugrahmen (3) verbunden ist, wobei der Benutzersitz (11) einen Arbeitsraum (W) für den Benutzer begrenzt, und wobei der Benutzersitz (11) und das Erntefahrzeug (1) so konfiguriert sind, dass der auf dem Benutzersitz (11) befindliche Benutzer zumindest während der Nutzung zumindest einen Teil der Pflanzen (A) der Reihe (R) der im Arbeitsraum (W) befindlichen Pflanzen ernten kann;
**dadurch gekennzeichnet, dass** das Erntefahrzeug (1) mit:
- Sensormittel (8) zum Erfassen der Pflanzen (A) in der Reihe der Pflanzen (R) zum Erfassen und/oder Bestimmen einer relativen Position und/oder Fahrtrichtung des Fahrzeugs (1) in Bezug auf die Reihe der Pflanzen; sowie
- eine Steuereinheit (9), die mit den Sensormitteln (8) und der Antriebseinrichtung (7) verbunden ist, und die zum Steuern der Antriebseinrichtung auf der Basis der von den Sensormitteln (8) erfassten Pflanzen (A) konfiguriert ist,
wobei die Sensormittel (8) mindestens ein erstes Sensorelement (81) umfassen, das zum Erfassen mindestens eines Teils eines oder mehrerer der Pflanzen konfiguriert ist, wobei das erste Sensorelement (81) nahe einer ersten seitlichen Seite des Erntefahrzeugs vorgesehen ist, und wobei die Sensormittel (8) mindestens ein zweites Sensorelement (81', 82, 82, 82') umfasst, das zum Erfassen mindestens eines Teils eines oder mehrerer der Pflanzen (A) konfiguriert ist, wobei das zweite Sensorelement (81', 82') nahe einer zweiten seitlichen Seite des Erntefahrzeugs (1), gegenüber der ersten seitlichen Seite, vorgesehen ist.

2. Erntefahrzeug nach Anspruch 1, wobei das erste Sensorelement (81) zum Erfassen von Pflanzen in einer ersten Erfassungsrichtung konfiguriert ist, wobei die erste Erfassungsrichtung im Wesentlichen in einem Winkel in Bezug auf die Längsachse des Erntefahrzeugs ist, und wobei das zweite Sensorelement (81', 82') zum Erfassen von Pflanzen in einer zweiten Erfassungsrichtung konfiguriert ist, wobei die zweite Erfassungsrichtung im Wesentlichen in einem Winkel in Bezug auf die Längsachse von dem Erntefahrzeug (1) verläuft, wobei die erste Erfassungsrichtung in einem Winkel in Bezug auf die zweite Erfassungsrichtung verläuft.

3. Erntefahrzeug gemäß einem der vorhergehenden Ansprüche, wobei das Steuern das Ändern der Richtung des Erntefahrzeugs (1), Beschleunigen des Erntefahrzeugs und/oder Abbremsen des Erntefahrzeugs (1) umfasst.

4. Erntefahrzeug nach einem der vorhergehenden Ansprüche, wobei die Sensormittel (8) ein Sensorelement (85) umfassen, das zum Erfassen einer Anzeige der Bewegungsgeschwindigkeit des Erntefahrzeugs (1) konfiguriert ist, wobei das Sensorelement (85) zum Erfassen mindestens eines Teils der Pflanzen (A) in einer Abtastrichtung (0) konfiguriert ist, wobei die Abtastrichtung im Wesentlichen rechtwinklig zur Längsrichtung des Erntefahrzeugs verläuft, wobei die Steuereinheit (9) zum Beschleunigen oder Abbremsen des Erntefahrzeugs auf der Grundlage des vom Sensorelement erfassten Signals konfiguriert ist.

5. Erntefahrzeug nach einem der vorstehenden Ansprüche, umfassend ein erstes benutzerbedienbares Aktivierungselement, das mit der Steuereinheit (9) verbunden ist, wobei die Steuereinheit (9) konfiguriert ist, um das Erntefahrzeug (1) mit einer ersten vorbestimmten Geschwindigkeit vorwärts zu bewegen, wenn das erste Aktivierungselement aktiviert wird, und insbesondere wobei die Steuereinheit (9) konfiguriert ist, um das Erntefahrzeug (1) anzuhalten, wenn das erste Aktivierungselement deaktiviert wird.

6. Erntefahrzeug nach Anspruch 5, umfassend ein zweites benutzerbedienbares Aktivierungselement, das mit der Steuereinheit (9) verbunden ist, wobei die Steuereinheit (9) konfiguriert ist, um das Erntefahrzeug (1) mit einer zweiten vorbestimmten Geschwindigkeit vorwärts zu bewegen, wenn das zweite Aktivierungselement aktiviert wird, und insbesondere wobei die Steuereinheit (9) konfiguriert ist, um das Erntefahrzeug (1) mit einer zweiten vorbestimmten Geschwindigkeit vorwärts zu bewegen, nur wenn sowohl das erste als auch das zweite Aktivierungselement aktiviert sind.

7. Erntefahrzeug nach Anspruch 6, wobei die zweite vorbestimmte Geschwindigkeit größer ist als die erste vorbestimmte Geschwindigkeit.

8. Erntefahrzeug nach einem der vorstehenden Ansprüche, wobei das Transportmittel (5) ein erstes Antriebsrad (51) und ein zweites Antriebsrad umfasst, wobei das erste Antriebsrad (51) und das zweite Antriebsrad (51') auf einander gegenüberliegenden Seiten des Erntefahrzeugs (1) vorgesehen sind und unabhängig voneinander durch die Antriebsmittel (7) angetrieben werden können.

9. Erntefahrzeug nach Anspruch 1 oder nach einem davon abhängigen Anspruch, umfassend ein weiteres Sensorelement (82, 83), das nahe der ersten seitlichen Seite des Erntefahrzeugs (1) vorgesehen ist.

10. Erntefahrzeug nach Anspruch 9, wobei das weitere Sensorelement (82, 83) in einer höheren Position in Bezug auf das erste Sensorelement (81) vorgesehen ist und/oder weiter stromabwärts, in Fahrtrichtung gesehen, des ersten Sensorelements (81) vorgesehen ist.

## Revendications

1. Véhicule de récolte (1) pour récolter des cultures (A) par un utilisateur, comprenant :
- un châssis de véhicule (3) et des moyens de transport (5) reliés à celui-ci ;
- des moyens d'entraînement (7) qui sont configurés pour entraîner les moyens de transport (5) et sont reliés au châssis de véhicule (3), où le véhicule de récolte est configuré de manière à pouvoir se déplacer au-dessus et sur une rangée (R) de cultures, en particulier au-dessus et sur une rangée d'asperges (A), par le biais des moyens d'entraînement (7) et des moyens de transport (5) ;
- un siège d'utilisateur (11) qui est relié au châssis de véhicule (3), où le siège d'utilisateur (11) délimite un espace de travail (W) pour l'utilisateur, et où le siège d'utilisateur (11) et le véhicule de récolte (1) sont configurés de manière à ce que, au moins en cours d'utilisation, l'utilisateur situé dans le siège d'utilisateur (11) puisse récolter au moins une partie des cultures (A) de la rangée (R) de cultures situées dans l'espace de travail (W) ;
**caractérisé en ce que** le véhicule de récolte (1) est muni :
- de moyens capteurs (8) pour détecter les cultures (A) dans la rangée de cultures (R) afin de détecter et/ou déterminer un emplacement relatif et/ou une direction de déplacement du véhicule (1) par rapport à la rangée de cultures ; ainsi que
- d'une unité de commande (9) qui est reliée aux moyens capteurs (8) et aux moyens d'entraînement (7) et qui est configurée pour commander les moyens d'entraînement sur la base des cultures (A) détectées par les moyens capteurs (8),
dans lequel les moyens capteurs (8) comprennent au moins un premier élément capteur (81) qui est configuré pour détecter au moins une partie d'une ou de plusieurs des cultures, où le premier élément capteur (81) est prévu près d'un premier côté latéral du véhicule de récolte, et où les moyens capteurs (8) comprennent au moins un deuxième élément capteur (81', 82, 82') qui est configuré pour détecter au moins une partie d'une ou de plusieurs des cultures (A), où le deuxième élément capteur (81', 82') est prévu près d'un deuxième côté latéral du véhicule de récolte (1), opposé au premier côté latéral.

2. Véhicule de récolte selon la revendication 1, dans lequel le premier élément capteur (81) est configuré pour détecter des cultures dans une première direction de détection, où la première direction de détection forme sensiblement un angle par rapport à l'axe longitudinal du véhicule de récolte, et où le deuxième élément capteur (81', 82') est configuré pour détecter des cultures dans une deuxième direction de détection, où la deuxième direction de détection forme sensiblement un angle par rapport à l'axe longitudinal du véhicule de récolte (1), où la première direction de détection forme un angle par rapport à la deuxième direction de détection.

3. Véhicule de récolte selon l'une des revendications précédentes, dans lequel la commande comprend le changement de la direction du véhicule de récolte (1), l'accélération du véhicule de récolte et/ou la décélération du véhicule de récolte (1).

4. Véhicule de récolte selon l'une des revendications précédentes, dans lequel les moyens capteurs (8) comprennent un élément de détection (85) qui est configuré pour détecter une indication de la vitesse de mouvement du véhicule de récolte (1), où l'élément de détection (85) est configuré pour détecter au moins une partie des cultures (A) dans une direction de détection (O), où la direction de détection est sensiblement perpendiculaire à la direction longitudinale du véhicule de récolte, où l'unité de commande (9) est configuré pour accélérer ou décélérer le véhicule de récolte sur la base du signal détecté par l'élément de détection.

5. Véhicule de récolte selon l'une des revendications précédentes, comprenant un premier élément d'activation pouvant être actionné par l'utilisateur qui est relié à l'unité de commande (9), où l'unité de commande (9) est configurée pour déplacer le véhicule de récolte (1) vers l'avant à une première vitesse prédéterminée lorsque le premier élément d'activation est activé, et en particulier où l'unité de commande (9) est configurée pour arrêter le véhicule de récolte (1) lorsque le premier élément d'activation est désactivé.

6. Véhicule de récolte selon la revendication 5, comprenant un deuxième élément d'activation pouvant être actionné par l'utilisateur qui est relié à l'unité de commande (9), où l'unité de commande (9) est configurée pour déplacer le véhicule de récolte (1) vers l'avant à une deuxième vitesse prédéterminée lorsque le deuxième élément d'activation est activé, et en particulier où l'unité de commande (9) est configurée pour déplacer le véhicule de récolte (1) vers l'avant à une deuxième vitesse prédéterminée uniquement lorsque les premier et deuxième éléments d'activation sont tous deux activés.

7. Véhicule de récolte selon la revendication 6, dans lequel la deuxième vitesse prédéterminée est supérieure à la première vitesse prédéterminée.

8. Véhicule de récolte selon l'une des revendications précédentes, dans lequel les moyens de transport (5) comprennent une première roue motrice (51) et une deuxième roue motrice (51'), où la première roue motrice (51) et la deuxième roue motrice (51') sont prévues sur des côtés mutuellement opposés du véhicule de récolte (1) et peuvent être entraînées indépendamment l'une de l'autre par les moyens d'entraînement (7).

9. Véhicule de récolte selon la revendication 1 ou une revendication qui en dépend, comprenant un autre élément capteur (82, 83) qui est prévu près du premier côté latéral du véhicule de récolte (1).

10. Véhicule de récolte selon la revendication 9, dans lequel l'autre élément capteur (82, 83) est prévu dans une position plus haute par rapport au premier élément capteur (81) et/ou plus en aval, vu dans la direction de déplacement, du premier élément capteur (81).
